# EUROPEAN PATENT SPECIFICATION

(11) **EP 2 020 792 B1**
(45) Date of publication and mention of the grant of the patent: **01.07.2015**
(21) Application number: 07015024.8
(22) Date of filing: 31.07.2007
(51) Int. Cl.: H04L 29/06, H04L 29/12

(54) **Method and device for data processing and communication system comprising such device**
Verfahren und Vorrichtung zur Datenverarbeitung und Kommunikationssystem mit einer derartigen Vorrichtung
Procédé et dispositif de traitement de données et système de communication comprenant un tel dispositif

(43) Date of publication of application: 04.02.2009
(73) Proprietor: ADTRAN GmbH, 13627 Berlin-Siemensstadt (DE)
(72) Inventor: Leutritz, Uwe, 85643 Steinhöring (DE); Schüler, Hartmut, 82064 Strasslach (DE)
(74) Representative: Brachmann, Roland W.

(56) References cited:
- GB-A- 2 421 156
- US-A1- 2007 043 876
- JENNINGS C ET AL: "Managing Client Initiated Connections in the Session Initiation Protocol (SIP); draft-ietf-sip-outbound-10.txt" IETF STANDARD-WORKING-DRAFT, INTERNET ENGINEERING TASK FORCE, IETF, CH, vol. sip, no. 10, 5 July 2007 (2007-07-05), XP015051693 ISSN: 0000-0004

## Description

The invention relates to a method and to a device for data processing and to a communication system comprising such a device.

Voice-over-IP (VoIP) services and subscribers can be integrated in a heterogeneous network structure if they use an IP address that is assigned by a service provider.

The same applies to nowadays available Integrated Access Devices (IADs) to which POTS and/or ISDN terminals are connected: For VoIP services an IP addressed assigned to the IAD by the provider is used.

A Session Initiation Protocol (SIP) (see, e.g., [1], [2]) is an application-layer control (signaling) protocol for creating, modifying, and terminating sessions with one or more participants. These sessions include Internet telephone calls, multimedia distribution, and multimedia conferences. SIP is widely used as a signaling protocol for Voice over IP, along with H.323 and others.

SIP comprises the following features:
- Low complexity due to its six methods;
- Transport-independent, because SIP can be used with UDP, TCP, ATM, etc.;
- Text-based, allowing an operator to read and understand SIP messages.

Wired or wireless (e.g., via WLAN) SIP phones may be connected directly to a network at a customer's site. However, if such network is connected to the Internet via a router, the IP addresses of the customer's network need to be translated into IP addresses utilized for VoIP beyond the router.

Hence the router (and/or firewall device) at the customer's site needs to translate the IP address assigned by the provider for VoIP services into an IP address according to RFC 1918 (for private utilization). Such translation is also referred to as NAT - Network Address Translation (see, e.g., [3]).

Regarding a NAT implementation, in particular four different scenarios are referred to: "Full cone NAT", "Restricted cone NAT", "Port restricted cone NAT" and "Symmetric NAT" (see [3] for further details).

In addition a STUN Protocol (Simple Traversal of User Datagram Protocol Through Network Address Translators, see [4]) and a TURN protocol (Traversal Using Relay Network Address Translation, see [5]) are known.

TURN is a protocol that allows for an element behind a NAT or a firewall to receive incoming data over TCP or UDP connections. It is useful for elements behind symmetric NATs or firewalls that wish to be on the receiving end of a connection to a single peer.

STUN is a network protocol allowing a client behind a NAT (or multiple NATs) to find out its public address, the type of NAT it is behind and the internet side port associated by the NAT with a particular local port. This information is used to set up UDP communication between two hosts that are both behind NAT routers. The protocol is defined in RFC 3489.

However, when utilizing VoIP the client behind a router or firewall at the customer's site comprises a serving functionality and thus needs address translation services. Furthermore, this client needs to continuously support the firewall with messages indicating to the firewall that a connection has to be maintained for incoming VoIP calls.

A Session Border Controller (SBC) is known (see [6]) as a device used in VoIP networks to exert control over the signaling and usually also the media streams involved in setting up, conducting, and tearing down calls. The SBC controls sessions, as they traverse borders between one part of a network and another.

One example of a Session Controller is described in UK Patent Application GB2421156A wherein a method is disclosed that allows SIP clients to change their address/port during a session.

Utilization of SBCs is expensive as mapping of private IP addresses to public IP addresses and vice versa requires huge tables to be maintained and processed at the SBC. Furthermore, the messages sent to the SBC indicating that a connection is to be kept up for potential incoming VoIP calls produces additional network load that further reduces the SBC's performance.

The problem to be solved is to overcome the disadvantages as stated before and to provide an approach that allows efficient utilization of VoIP services between a private and a public network.

This problem is solved according to the features of the independent claims. Further embodiments result from the depending claims.

It is to be noted that a (first or second) registration may comprise a message indicating that a connection to the client has to be maintained. This is in particular useful for (incoming) VoIP calls. Insofar, the client may at least partially comprise a functionality of a server (relating, e.g., to an Internet telephony service).

In particular, the network the client is connected to can be the Internet or any (publicly) available (sub-)network.

Traversal of User Datagram Protocol Through Network Address Translation (STUN) and/or a Traversal Using Relay Network Address Translation (TURN).

Hence, preferably, a STUN protocol and/or a TURN protocol (or any such derivate) may be implemented in the access node thereby enabling efficient address translation in particular between the client and the network.

The at least one first registration is in particular utilized to indicate that the client can be reached from beyond the access point, e.g., from the Internet. Therefore, the access point translates the IP address to the client and vice versa.

In an embodiment, the at least one first registration and/or the at least one second registration comprises a message that indicates that a connection is to be maintained.

It is also an embodiment that the client comprises a Voice over IP (VoIP) functionality.

Pursuant to another embodiment, the client is connected to a network element capable of performing a VoIP functionality.

The client and/or the access node can be connected to a network element within the network at the customer's site. In particular the client and/or the access node can be connected to a Customer-Premises Equipment (CPE).

According to an embodiment, the access node is a Multi Service Access Node (MSAN), in particular a Digital Subscriber Line Access Multiplexer (DSLAM).

According to another embodiment, the access node utilizes a hash table to inform further access nodes about resources allocated.

Such hash table can be realized in particular as a distributed hash table (DHT), wherein information stored is distributed among several network elements and/or storage media and/or databases.

For such distributed storing of data, a CHORD mechanism may be applied (see [7] for further details on CHORD).

In yet another embodiment, the resources allocates comprises:
- access parameters related to authorized VoIP clients;
- tables and parameters required for STUN and/or TURN.

Advantageously, resources can be distributed throughout the network to distribute the network load and traffic accordingly. Hence, computing power at particular network elements, in particular at gateways, SIP gateways, MSANs or the like can be utilized in this manner.

The access node may provide information related to the resources stored, in particular convey such information to other network elements of the network.

The problem stated supra is also solved by a device for data processing comprising a processor unit that is equipped /arranged such that the method as described herein is executable on said processor unit.

According to a next embodiment said device is a communication device, in particular a Multi Service Access Node (MSAN). Said device may further be a Digital Subscriber Line Access Multiplexer (DSLAM).

Pursuant to yet an embodiment, the device comprises means for executing a STUN protocol and/or a TURN protocol.

It is also an embodiment that the device comprises means for address translation.

The problem stated supra is also solved by a communication system comprising the device as described herein.

Embodiments of the invention are shown and illustrated in the following figures:
- Fig.1: shows a scenario comprising a private network and a public network separated by an access node, wherein the access node comprises a SIP Relay and means for processing a STUN protocol and/or a TURN protocol;
- Fig.2: shows a communication chart comprising messages to be sent as well as steps to be performed by various entities.

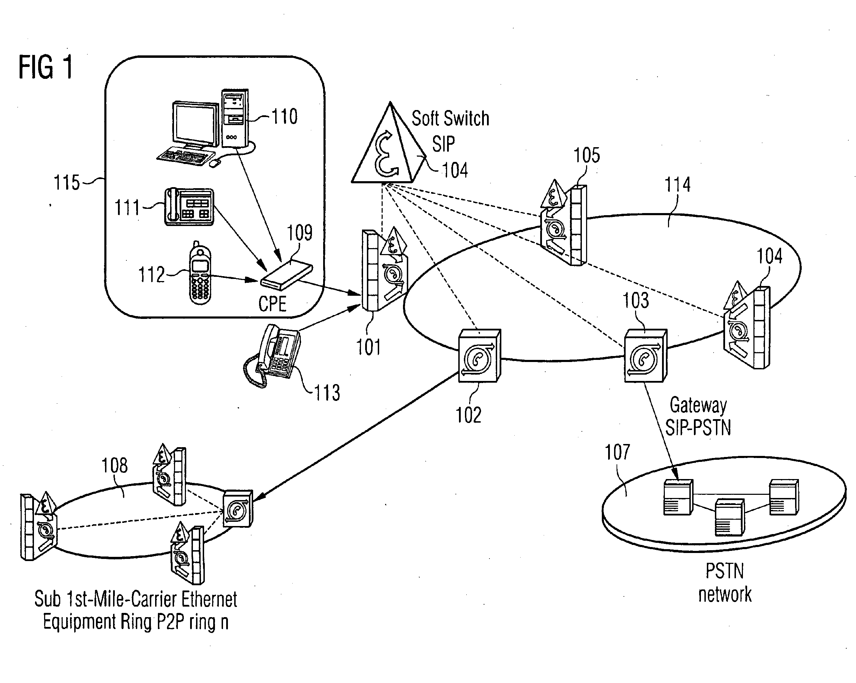

**Fig.1** shows a scenario comprising several networks. A Multi Service Access Node MSAN 101 is connected to a network 114 that can be (a portion of) a public network like the Internet. The public network 114 comprises network elements MSAN 101, MSAN 104, MSAN 105, gateway 102 and gateway 103.

The MSAN 101 is connected to the gateway 102 that is further connected to the gateway 103. The gateway is connected to a further network 108 that comprises a carrier Ethernet ring network. The gateway 103 comprises a SIP-PSTN functionality and is connected to a PSTN network 107.

The MSAN 105 is connected to the MSAN 101 and to the MSAN 104. A soft switch 104 with a SIP functionality is connected to the network elements 101 to 105.

The MSAN 101 comprises a SIP relay functionality, a STUN protocol and a TURN protocol. The MSAN 101 is further connected to a POTS/ISDN device 113 and via a CPE 109 to a VoIP software-based PC 110, a VoIP telephone 111 and a VoIP WLAN phone 112. The components 109 to 112 are located within a private network 115.

The MSAN 101 is equipped to process a STUN protocol and a TURN protocol thereby enabling network address translation (NAT) services providing private IP addresses for a VoIP service.

Furthermore, the MSAN 101 is capable of reducing traffic directed to the network 114. This is achieved by responding to registration messages ("re-registration messages") transmitted from the VoIP clients within the private network 115. Such functionality may preferably be implemented as a SIP relay inside the MSAN 101.

A VoIP client 110, 111 or 112 registers ("first registration") at the MSAN 101. Such registration is forwarded by the MSAN 101 to the soft switch 104. The VoIP client 110, 111 or 112 re-registers, i.e. sends said first registration, in short time intervals to the MSAN 101 in order to keep up the connection to the MSAN 101 via the CPE 109.

The MSAN 101 sends the re-registration as "second registration" to the soft switch 104, wherein a time interval between each such second registration is considerably longer (about 30 to 90 minutes) than a time interval between first registrations as transmitted by the VoIP client 110, 111 or 112. This significantly reduces a traffic provided towards the network 114.

In addition, the STUN and TURN algorithms are preferably implemented with the MSAN 101 within the 1^{st}-Mile-Carrier Ethernet equipment.

The VoIP client 110, 111 or 112 automatically detects which NAT is implemented and thus uses TURN or STUN mechanisms accordingly to achieve NAT traversal.

The SIP relay functionality implemented inside the MSAN 101 preferably utilizes a distributed hash table (DHT) thereby publishing its resources towards other network elements of the network 114. This allows to meet data security requirements according to which only predefined VoIP clients should be able to successfully register themselves. In addition, resources required for STUN and TURN algorithms can be made public towards the network elements of the network 114. This allows to distribute resources required for those algorithms throughout the network elements of the network 114, e.g., according to the computing power available at the respective network element. For distributing purposes a CHORD mechanism can be utilized as described in [7].

Further advantages of this approach are as follows:
Already existing 1^{st}-Mile-Carrier Ethernet equipment like DSLAM devices are preferably supplemented by means capable of processing NAT traversal and SIP relay functionalities.
The SIP relay functionality allows a reduction of the traffic towards the network 114 thereby reducing the load for the SIP proxy and/or the soft switch 104.
Implementation of the STUN and/or TURN algorithms as described reduces the load for a Session Border Controller SBC and hence enhances its performance.
A distributed hash table (DHT) allows to distribute resources throughout the network 114 thereby increasing the overall performance of its components as well as the resiliency of the network. Another advantage of such DHT is a distributed access control of VoIP clients as well as a load-sharing regarding such access control.
It is also an advantage that the TURN algorithm allows wiretapping by duplicating the whole data stream (speech and data) at an access point to be selected by an authorized party.

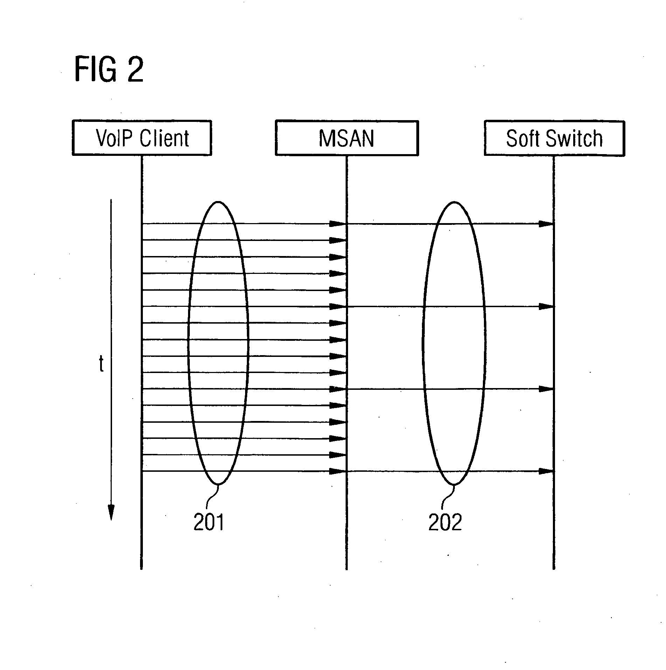

Fig.2 shows a communication chart comprising messages transmitted from a VoIP client (such as VoIP clients 110, 111 or 112 of Fig.1) to a MSAN (such as MSAN 101 of Fig.1) and from the MSAN to a Soft Switch (such as the soft switch 104 of Fig.1).
Several first registrations 201 are transmitted at a predetermined rate from the VoIP client to the MSAN (access node). The MSAN transmits several second registrations 202 to the Soft Switch at a rate that is considerably below the rate of the first registrations 201. Hence, the traffic produced by the MSAN towards the Soft Switch is reduced compared to a scenario where all first registrations 201 would have been conveyed to the Soft Switch.
Furthermore, the MSAN performs address translation between the VoIP client and caller or called party outside the network 115 (see Fig.1) thereby utilizing the STUN protocol and/or the TURN protocol.
The mechanism proposed hence allows in an efficient manner to utilize VoIP services enabling mapping of IP addresses of different networks in particular in combination with keeping up a connection to a client behind the MSAN that needs to be reached from the outside. Insofar, the serving functionality of said VoIP client can be satisfied by the means provided by the MSAN.

### References:

[1] Wikipedia:
   http://en.wikipedia.org/wiki/Session_Initiation_Proto col
[2] RFC 3261: http://tools.ietf.org/html/rfc3261
[3] Wikipedia:
   http://en.wikipedia.org/wiki/Network_address_translat ion
[4] STUN:
   Wikipedia: http://en.wikipedia.org/wiki/STUN
   RFC 3489: http://tools.ietf.org/html/rfc3489
[5] TURN:
   Wikipedia:
   http://en.wikipedia.org/wiki/Traversal_Using_Relay_NA T
   draft-rosenberg-midcom-turn-08:
   http://www.jdrosen.net/papers/draft-rosenberg-midcom-turn-08.txt
[6] Wikipedia:
   http://en.wikipedia.org/wiki/Session_Border_Controlle r
[7] Stoica et al.: Chord: A Scalable Peer-to-peer Lookup Service for Internet Applications, SIGCOMM'01, August 27-31, 2001, San Diego, CA, USA; see: http://pdos.csail.mit.edu/papers/chord:sigcomm01/

## Claims

1. A method for data processing in a network wherein
- at least one first registration is transmitted from a client (**110**, **111**, **112**) to an access node (**101**);
- at least one second registration is transmitted from the access node (**101**) to a soft switch (**104**), the at least one second registration being associated with the at least one first registration;
- the access node connects the client (**110**, **111**, **112)** with the network;
- the access node (**101**) conducts an address translation between the client and the network using a Simple Traversal of User Datagram Protocol Through Network Address Translation, STUN, and/or a Traversal Using Relay Network Address Translation, TURN; and
- the at least one second registration is transmitted at a lower rate than the at least one first registration **characterized in that**
the access node (**101**) utilizes a distributed hash table to distribute resources required for STUN and/or TURN throughout the network.

2. The method according to any of the preceding claims,
wherein the at least one first registration and/or the at least one second registration comprises a message that indicates that a connection is to be maintained.

3. The method according to any of the preceding claims,
wherein the client (**110**, **111**, **112**) comprises a VoIP functionality.

4. The method according to any of the preceding claims,
wherein the client (**110**, **111**, **112**) is connected to a network element capable of performing a VoIP functionality.

5. The method according to any of the preceding claims,
wherein the access node (**101**) is a Multi Service Access Node, MSAN, in particular a Digital Subscriber Line Access Multiplexer, DSLAM.

6. The method according to any of the preceding claims,
wherein the distributed hash table also comprises:
- access parameters related to authorized VoIP clients;

7. An access node (**101**) for data processing comprising a processor unit that is arranged such that the method according of any of the preceding claims is executable on said processor unit.

8. The access node (**101**) according to claim 7, wherein said device (**101**) is a communication device, in particular a Multi Service Access Node, MSAN.

9. The access node (**101**) according to claim 7, wherein said device (**101**) is a Digital Subscriber Line Access Multiplexer, DSLAM.

10. The access node (**101**) according to any of claims 7 to 9 comprising means for executing a STUN protocol and/or a TURN protocol.

11. The access node (**101**) according to any of claims 7 to 10 comprising means for address translation.

12. Communication system comprising the access node (**101**) according to any of claims 7 to 11.

## Patentansprüche

1. Verfahren zur Datenverarbeitung in einem Netzwerk, wobei
- mindestens eine erste Registrierung von einem Client (110, 111, 112) zu einem Zugangsknoten (101) übertragen wird;
- mindestens eine zweite Registrierung vom Zugangsknoten (101) zu einem Softswitch (104) übertragen wird, wobei die mindestens eine zweite Registrierung mit der mindestens einen ersten Registrierung verknüpft ist;
- der Zugangsknoten den Client (110, 111, 112) mit dem Netzwerk verbindet;
- der Zugangsknoten (101) eine Adressenübersetzung zwischen dem Client und dem Netzwerk mittels eines "Simple Traversal of User Datagram Protocol Through Network Address Translation" (STUN) und/oder eines "Traversal Using Relay Network Address Translation" (TURN) durchführt; und
- die mindestens eine zweite Registrierung mit einer niedrigeren Geschwindigkeit als die mindestens eine erste Registrierung übertragen wird,
**dadurch gekennzeichnet, dass**
der Zugangsknoten (101) eine verteilte Hash-Tabelle verwendet, um Ressourcen, die für STUN und/oder TURN benötigt werden, über das gesamte Netzwerk zu verteilen.

2. Verfahren nach einem der vorhergehenden Ansprüche, wobei die mindestens eine erste Registrierung und/oder die mindestens eine zweite Registrierung eine Nachricht umfasst, die anzeigt, dass eine Verbindung aufrechterhalten werden soll.

3. Verfahren nach einem der vorhergehenden Ansprüche, wobei der Client (110, 111, 112) eine VoIP-Funktionalität aufweist.

4. Verfahren nach einem der vorhergehenden Ansprüche, wobei der Client (110, 111, 112) mit einem Netzwerkelement verbunden ist, das imstande ist, eine VoIP-Funktionalität auszuführen.

5. Verfahren nach einem der vorhergehenden Ansprüche, wobei der Zugangsknoten (101) ein "Multi Service Access Node" (MSAN) und insbesondere ein "Digital Subscriber Line Access Multiplexer" (DSLAM) ist.

6. Verfahren nach einem der vorhergehenden Ansprüche, wobei die verteilte Hash-Tabelle außerdem aufweist:
- Zugangsparameter, die berechtigte VoIP-Clients betreffen.

7. Zugangsknoten (101) zur Datenverarbeitung, der eine Prozessoreinheit aufweist, die so eingerichtet ist, dass das Verfahren nach einem der vorhergehenden Ansprüche auf der Prozessoreinheit ausführbar ist.

8. Zugangsknoten (101) nach Anspruch 7, wobei die Vorrichtung (101) eine Kommunikationsvorrichtung und insbesondere ein "Multi Service Access Node" (MSAN) ist.

9. Zugangsknoten (101) nach Anspruch 7, wobei die Vorrichtung (101) ein "Digital Subscriber Line Access Multiplexer" (DSLAM) ist.

10. Zugangsknoten (101) nach einem der Ansprüche 7 bis 9, der Mittel zum Ausführen eines STUN-Protokolls und/oder eines TURN-Protokolls aufweist.

11. Zugangsknoten (101) nach einem der Ansprüche 7 bis 10, der Mittel zur Adressenübersetzung aufweist.

12. Kommunikationssystem, das den Zugangsknoten (101) nach einem der Ansprüche 7 bis 11 aufweist.

## Revendications

1. Procédé de traitement de données dans un réseau, dans lequel :
- au moins un premier enregistrement est transmis à partir d'un client (110, 111, 112) à un noeud d'accès (101) ;
- au moins un deuxième enregistrement est transmis à partir du noeud d'accès (101) à un commutateur logiciel (104), ledit deuxième enregistrement étant associé au dit premier enregistrement ;
- le noeud d'accès connecte le client (110, 111, 112) au réseau ;
- le noeud d'accès (101) effectue une traduction d'adresses entre le client et le réseau en utilisant un protocole STUN, traversée simple de UDP à travers les traducteurs d'adresse réseau, et/ou un protocole TURN, traversée à l'aide des traducteurs d'adresse réseau de relais ; et
- ledit deuxième enregistrement est transmis à un débit inférieur à celui avec lequel ledit premier enregistrement est transmis,
**caractérisé en ce que**
le noeud d'accès (101) utilise une table de hachage distribuée pour distribuer des ressources requises pour STUN et/ou pour TURN dans l'ensemble du réseau.

2. Procédé selon l'une quelconque des revendications précédentes, dans lequel ledit premier enregistrement et/ou ledit deuxième enregistrement comprennent un message qui indique qu'une connexion doit être maintenue.

3. Procédé selon l'une quelconque des revendications précédentes, dans lequel le client (110, 111, 112) comprend une fonctionnalité VoIP.

4. Procédé selon l'une quelconque des revendications précédentes, dans lequel le client (110, 111, 112) est connecté à un élément réseau capable d'exécuter une fonctionnalité VoIP.

5. Procédé selon l'une quelconque des revendications précédentes, dans lequel le noeud d'accès (101) est un noeud d'accès multiservice, MSAN, en particulier un multiplexeur d'accès de ligne d'abonné numérique, DSLAM.

6. Procédé selon l'une quelconque des revendications précédentes, dans lequel la table de hachage distribuée comprend également :
- des paramètres d'accès associés à des clients VoIP autorisés.

7. Noeud d'accès (101) de traitement de données comprenant une unité de traitement qui est conçue pour que le procédé selon l'une quelconque des revendications précédentes soit exécutable sur ladite unité de traitement.

8. Noeud d'accès (101) selon la revendication 7, dans lequel ledit dispositif (101) est un dispositif de communication, en particulier un noeud d'accès multiservice, MSAN.

9. Noeud d'accès (101) selon la revendication 7, dans lequel ledit dispositif (101) est un multiplexeur d'accès de ligne d'abonné numérique, DSLAM.

10. Noeud d'accès (101) selon l'une quelconque des revendications 7 à 9 comprenant des moyens permettant d'exécuter un protocole STUN et/ou un protocole TURN.

11. Noeud d'accès (101) selon l'une quelconque des revendications 7 à 10 comprenant des moyens pour une traduction d'adresses.

12. Système de communication comprenant le noeud d'accès (101) selon l'une quelconque des revendications 7 à 11.
